# EUROPÄISCHE PATENTSCHRIFT

(11) **EP 0 973 091 B1**
(45) Veröffentlichungstag und Bekanntmachung des Hinweises auf die Patenterteilung: **11.09.2002**
(21) Anmeldenummer: 99113812.4
(22) Anmeldetag: 15.07.1999
(51) Int. Cl.: G06F 9/44

(54) **Verfahren zum Erzeugen eines regel- und anpassbaren Netzwerkes von Modellen von Verhaltensmustern**
Method to generate a controllable and adaptable network of models of behaviour templates
Méthode pour générer un réseau contrôlable et adaptable des modèles de gabarits de comportement

(30) Priorität: 15.07.1998 DE 19831651
(43) Veröffentlichungstag der Anmeldung: 19.01.2000
(73) Patentinhaber: Sobich, Joachim F., 53173 Bonn (DE); Kiefer, Horst, 41209 Mönchengladbach (DE)
(72) Erfinder: Sobich, Joachim F., 53173 Bonn (DE); Kiefer, Horst, 41209 Mönchengladbach (DE)

(56) Entgegenhaltungen:
- EP-A- 0 438 843
- KLINT P: "A META-ENVIRONMENT FOR GENERATING PROGRAMMING ENVIRONMENTS" ACM TRANSACTIONS ON SOFTWARE ENGINEERING AND METHODOLOGY,US,ASSOCIATION FOR COMPUTING MACHINERY, NEW YORK, Bd. 2, Nr. 2, 1. April 1993 (1993-04-01), Seiten 176-201, XP000365045 ISSN: 1049-331X

## Beschreibung

Die Erfindung betrifft ein Verfahren zum Erzeugen eines Netzwerkes von Modellen von Verhaltensmustern und sein Optimieren in kontrollierten und iterativen Schritten,
insbesondere für Problembereiche ohne deterministische Lösungsverfahren *und* für Methoden-Modelle mit offenen Übergangsräumen unter Verwendung eines MOF-konformen Repository auf einem Computersystem. Dadurch betrifft die Erfindung auch das Erzeugen von Software-Systemen aus Modellen,
insbesondere fiir beliebig steuer-, regel- oder anpassbare Ablauffolgen und die einstellbare Zusammenarbeit von Methoden-Modellen, Agenten oder anderen Softwareartefakten gemäß dem erfinderischen Verfahren herstellbaren Elementen wie elementaren Grundmustern, komplexe Grundmuster, Rahmenwerke, Ablaufeinheiten, gekapselte Softwarekomponenten.

Für das Verständnis der Erfindung sind die folgenden zwei Dokumente aus dem bisherigen Stand der Technik nützlich:

EP-A-438 843 (IBM) und KLINT P: "A META-ENVIRONMENT FOR GENERATING PROGRAMMING ENVIRONMENTS", ACM TRANSACTIONS ON SOFTWARE ENGINEERING AND METHODOLOGY, US, ASSOCIATION FOR COMPUTING MACHINERY, NEW YORK, Band 2, Nr. 2, 1 April 1993, Seiten 176-201.

Software ist ein sehr komplexes Gebilde, das gedanklich schwer zu durchdringen ist. Die gedankliche Umsetzung der Nutzerforderungen in Software erfordert stringent-logisches Denken, das nur selten anzutreffen ist. Eine hohe kreative Veranlagung wird bei den Beteiligten erwartet, aber Leute mit guten Ideen sind dünn gesät. Das Programmieren im Großen, das Aufbauen eines Systems aus Teilen, die zweckmäßig zusammenspielen muß beherrscht werden.
Von den Hürden, dem Aufwand und den Schwierigkeiten Software zu machen, berichten viele Autoren.
Der Stand der Kunst der Methoden und Werkzeuge für die Softwareentwicklung läßt zu wünschen übrig. Alle diese Feststellungen finden sich bei:

Ernst Denert, Software-Engineering, Springer Verlag 1991, S.4 ff.; Barry W. Boehm, Wirtschaftliche Software-Produktion, Forkel-Verlag, Wiesbaden 1986, S.11 ff.; Grady Booch, Objektorientierte Analyse und Design, Addison-Wesley, 1. korrigierter Nachdruck 1995; Bernd Oestereich, Objektorientierte Softwareentwicklung mit der Unified Modeling Language, Oldenbourg Verlag, 3. aktualisierte Auflage, München 1997, Seite 60. Erich Gamma, Richard Helm, Ralph Johnson, John Vlissides; Entwurfsmuster, Elemente wiederverwendbarer objektorientierter Software; Addison-Wesley Verlag, 1. korrigierter Nachdruck 1997, Bonn, Seite 1-2; Seite 14-16. Frank Buschmann, Regine Meunier, Hans Rohnert, Peter Sommerlad, Michael Stal; Pattern-orientierte Software-Architektur, Addison Wesly Longmann Verlag, Bonn 1998, Seite 24; Helmut Balzert, Lehrbuch der Software-Technik, Spektrum Verlag 1996, Seite 11ff., seine Begriffs-Definition von Software, Software-Technik und Software-System wird hier berücksichtigt, S. 36.

Im herkömmlichen Erstellungsverfahren für informationstechnische Anwendungen wird von der verwendeten Programmiersprache der Blickwinkel bestimmt, unter dem die Auswahl unter den bekannten Architektur- und Entwurfs-Mustern getroffen wird. Diese Wahl legt u.a. fest, wie hoch der Aufwand an Ressourcen für eine Implementierung sein wird. Die erwarteten Unterschiede in den Aufwänden haben zur Folge, daß vorteilhafte Muster nicht immer an den für sie erfolgreichsten Stellen eingesetzt werden.
Alle Verfahren und Hilfsmitteln nach dem heutigen Stand der Technik erleichtern oder automatisieren nur diskrete Schritte und Teile des Weges von der Anforderungsanalyse bis zur Implementierung und den Test des fertigen Softwareproduktes und verlangen entweder vom Analytiker, dem Entwerfer der Architektur oder den implementierenden Softwareentwicklern in wesentlichen Abschnitten ihrer Arbeiten, vertrauend auf ihr Geschick und Können, manuell und nicht werkzeuggestützt, die bestehenden Lücken in der Verfahrenskette zu schließen.
Es ist derzeit noch kein Verfahren oder Werkzeug bekannt, das den gesamten Produktionsprozeß von Analyse über Entwurf bis zur Laufzeitüberwachung durchgängig und konsistent automatisiert, und bei dem das fertige Ergebnis sich noch an Veränderungen seiner Laufzeitumgebung anpassen kann.
Die Druckschrift DE 195 23 036 A1 beschreibt den Stand der Technik für gängige Verarbeitungsmuster der Bildschirm-, Formular- oder Datenbankanwendung aus halbfertigen Bausteinen ein Quellprogramm in einer traditionellen Programmiersprache der 3. Generation und die zugehörige Entwurfsdokumentation generiert. Weiterhin sind entwurfsunterstützende kommerzielle Produkte bekannt, die ähnlich wie der Generator nach DE 195 23 036 A1 Quellcode in verschiedenen Programmiersprachen generieren können. Diese Fähigkeiten sind für eine Nutzung durch das erfindungsgemäße Verfahren geeignet. Jedoch besteht der Nachteil, dass in beiden Fällen der Analyse- und Entwurfsprozess sowie das Testverfahren vollständig vom Bediener erledigt werden müssen.
Programmgeneratoren entsprechend dem Stand der Technik gemäß der Druckschrift DE 689 23 126 T2 begegnen den vorgenannten Mängeln durch mehrere Maßnahmen, insbesondere durch eine lernfähige Wissensbasis, automatisierte Entwurfsanalyse einschließlich Simulation und automatisierte Verifikation sowie der Automatisierung des Testverfahrens. Wie bei DE 195 23 036 A1 ist auch hier der Syntheseprozess und damit die Ebene der Modellierung auf Programmiernineau.
Dadurch ist auch dieses System auf Softwareproduktion begrenzt. Sowohl bei DE 195 23 036 A1 wie auch bei DE 698 23 126 T2 sind die damit offenbarten Systeme auf den Entwurfzeitpunkt begrenzt, insbesondere ist auf die Wissensbasis bei DE 698 23 126 T2 zur Laufzeit nicht mehr zuzugreifen, sodass alle genannten Vorteile der automatischen Anpassung durch das "Softwareüberprüfungsmittel" (in Verbindung mit dem "Fehlerart- und Auswirkungsanalysemittel") nur während der Designphase vorhanden sind.
Verfahren und Systeme des oben dargelegten Standes der Technik sind programmierorientiert and nicht modellier-orientiert.
Das erfindungsgemäße Verfahren erlaubt die Modellierung mit Verhaltensmustern zu automatisieren und gestattet es über den Bereich der Software hinaus auch andere verhaltensgeprägte Anwendungsgebiete zu bearbeiten, zu erschliessen. Erzeugte Software Ergebnisse besitzen Fähigkeiten, sich aufgrund der aktuellen Laufzeitumgebung zu ändern und entsprechend anzupassen.

Aufgabe der Erfindung ist, ein Verfahren bereitzustellen mit dem vorteilhaft beliebige Netzwerke von Modellen von Verhaltensmustern, von Methoden in unterschiedlichen Anwendungsgebieten bei geringem Aufwand und in kürzester Zeit zu bauen sind und die im Falle von Softwareproduktion ihr Verhalten auch noch zur Laufzeit geänderten Verhältnissen anpassen können.
Diese Aufgabe wird erfinderisch gelöst,
- indem *auf der Ebene der Modellierung* automatisiert Elemente erzeugt werden, aus denen beliebig komplexe erfindungsgemäße elementare Grundeinheiten erzeugt werden, die wiederum Elemente in weiteren Aggregationen sein können. Im erfindungsgemässen Verfahren erzeugte Elemente sind insbesondere Muster, Rahmenwerke, Software- und andere Modell-Systeme, die im weiteren allgemein als "Elemente" bezeichnet werden,
- indem alle Elemente mit erfindungsgemäßen Fähigkeiten, d.h. über ihr Modell und die darin enthaltene Modellierungstechnik interpretierbar und manipulierbar, über eine Vier-Schichten-Metamodellierung derart beschrieben werden, daß beliebige Aggregrationsmechanismen des erfinderischen Verfahrens eingesetzt werden können.
Das erfinderische Verfahren wird zwar hauptsächlich mit informationstechnischen Begriffen beschrieben, weil vor allem die verwendeten Beschreibungsmechanismen aus diesem Bereich kommen, aber es ist in allen Disziplinen einsetzbar, bei denen komplexe Verhaltensmuster anhand von Modellen beschrieben, untersucht oder beherrscht werden.

Das erfindungsgemäße Verfahren erweitert den Stand der Technik zunächst durch seine neuartige Zusammenfassung und Nutzung des Standes der Technik und erweitert ihn zusätzlich in folgenden Bereichen:
1. Schaffen einer Beschreibungsstruktur für fachliche Sprach- und Sichtweisen, in der Fach- oder in der System-Modellierung, geordnet und dynamisiert über ein verfahrensspezifisches Vier-Schichten Metamodell und die Ablage der Metamodelle in Repositories, besonderen Datenbanken, die im erfinderischen Verfahren die aktive Bearbeitung aller Metaschichten in den Laufzeitumgebungen manipulierbar verwalten.
2. Musterbasierter Architektur-Entwurf, geordnet und dynamisiert über das Modellierungswissen der Meta-Strukturen im Repository.
3. Integration intelligenter Software-Agenten zu einem Netzwerk von Verhaltensmustern von Methoden-Modellen, geordnet und dynamisiert über das Modellierungswissen der Meta-Strukturen im Repository.
4. Automatisiertes generieren von selbstanpassenden Anwendungs-Rahmenwerken einschließlich von polymorphen Agenten aufgrund der erfinderischen Verfahren zu den Punkten 1 bis 3.

**Zu 1.** Der eingebrachte Stand der Technik wird erfindungsorientiert erörtert und die hinausragenden Teile dargestellt. In Anwendungsbereichen, in denen Softwaresyteme einsetzbar sind, werden die Arbeitsverhältnisse der Benutzer mit Hilfe materialer Fachsprachen organisiert. Neben einer Semantik der Strukturwörter (z.B. und, alle, ist) ist in materialen Sprachen eine eindeutige Semantik der Themenwörter (z.B. Marketing-Budget, bestellen, kreditwürdig) beim Systementwurf von gleichrangiger Bedeutung.
Mit der Verwendung der materialen Sprachen in der Informationssystementwicklung ist eine terminologische Kontrolle aller Stufen der Systementwicklung aus einem Lexikon heraus erzielbar. Begriffe (Themenwörter) werden nicht durch beliebige Abstimmung, sondern durch systematische Rekonstruktion mit den Begriffsbenutzern in den Anwendungsbereichen zur Geltung gebracht. Die Verifikation (und Validierung) wird methologisch dreidimensional verankert, syntaktisch (Form), semantisch (Inhalt) und pragmatisch (Geltung und Handlungsrelevanz). Fundstelle: Ortner, Erich, Methodenneutraler Fachentwurf- Teubner Stuttgart-Leipzig 1997.
Modelle und Systeme sind abstrakte Begriffe, sie entstehen durch eine Interpretation der Realität. Durch sie verschaffen wir uns ein Bild über einen Ausschnitt aus der Realität, den Diskursbereich, der dann als ein System dient und durch Bildung von Modellen Hypothesen aufstellen und überprüfen läßt bzw. Wissen über das System ableitbar und entsprechend nutzbar macht.
Voraussetzung dafür, daß ein System ein Modell eines anderen Systems ist, ist die Existenz einer Abbildungsbeziehung zwischen beiden Systemen.
In der Betriebswirtschaftslehre und im Bereich der rechnergestützen Software-Erstellung wird die Bezeichnung 'Modell' nicht im Sinne eines eindeutigen Verhältnisses zwischen zwei Systemen eingesetzt, sondern drückt ein Ziel aus, das für die Beziehung zwischen zwei Systemen gelten sollte, aber kaum erreichbar ist. Bei diesem Modellbegriff steht die zweckdienliche Abbildung von Systemen durch andere Systeme im Vordergrund: Das Kriterium für die Qualität eines Modells ist der durch seine Anwendung erzielbare Nutzen.
Entwirft man für ein Objektsystem I ein Modellsystem M I zu einem bestimmten Zweck Z und gibt es ein Modell M II des Modellsystems M I, so bezeichnet man M II auch als Metamodell in bezug auf das Objektsystem I.
Metamodelle sind von Nutzen, um die Strukturen von Modellen zu definieren.

Ein Zweck von Metamodellen ist, eine günstige Struktur fiir die Ablage, Darstellung und das Management und das Verhalten von Modellen zu spezifizieren. Mit Metamodellen werden eindeutige Abbildungsbeziehungen zwischen den Elementen des Modellsystems und des Metamodellsystems, die konsistent und vollständig sind, erreicht. Meta-Daten geben über andere Daten Auskunft.

Eine vorteilhafte Infrastruktur ist die Beschreibungsweise von Modellen und Konzepten in einer Aufteilung über vier Schichten hinweg, um eine in sich schlüssige Beschreibung komplexer Strukturen zu gestalten. Eingebettet in den Ansatz der Metamodellierung erhält man mit der erfinderischen Lösung eine Beschreibungsart für ein Modell, mit anderen Worten ein Modell von Modellierungselementen. Das Vier-Schichten-Modell zur Beschreibung komplexer Strukturen ist Bestandteil der erfinderischen Lösung. Hierbei ist besonders die gleichzeitige Verfügbarkeit aller Modellierungsschichten und die verfahrensgemäße Manipulation von Modellteilen einer Schicht anhand von Modellierungswissen einer höheren Schicht durch erfindungsgemäße polymorphe Agenten eine neuartige Verwendung von Metamodellierung.
Analyse-, Design- und Buildtools verwenden unterschiedliche Diagrammtypen, um die verschiedenen Aspekte eines Anwendungsbereichs und des zugehörigen Informationssystem darzustellen.
Die erforderliche Zusammenhangsdefinition leistet ein formales Metamodell. Eine strenge Festlegung der Notation durch ein Metamodell ist vorteilhaft, da Mehrdeutigkeiten in der Notation Unklarheiten in die entsprechenden Modelle tragen, die nur schwer zu eliminieren sind. Ein Metamodell bietet eine gute Basis fiir Konsistenzprüfungen und ist eine notwendige Grundlage für Repositories.

Es ist notwendig, das erfinderische Verfahren in seiner Komplexität angemessen zu beschreiben und die Grundlage, um für fachlich ausreichend Kundige, den Bau und die Verwendung zu sichern. Die auszuwählende Beschreibungssprache muß in der Lage sein, alle Bereiche des erfinderischen Verfahrens konsistent abzubilden.
Die Unified Modelling Language (UML) ab der Version 1.1, zusammen mit der Meta Object Facility (MOF), einer Vier-Schichten Metamodell-Struktur: user objects, model, metamodel und meta-metamodel, erfüllt diese Anforderung.
Die Unified Modelling Language (UML) und die Meta Object Facility (MOF) sind ein durch die Object Management Group (OMG) seit Nov. 1997 anerkannter Standard.
Es ist weit verbreitet, Datenressourcen, orientiert an der 3-Schema-Architektur nach ANSI/SPARC (American National Standards Institute/Standard Planning and Requirement committee), zu beschrieben und zu verwalten. Hier sind die Schema-Bereiche Externe-, Interne-Schemata und Konzeptionelles-Schema Metadaten, die Aussagen über die Datenressourcen beschreiben. Das Konzeptionelle Schema bestimmt die allen Schemata gemeinsame Semantik (Begriffe) der Daten.

Zur Lösung der erfinderischen Aufgabe werden die Informationen im Unterstützungs-Verfahren besonders vorteilhaft in einem Repository, einem System zur Verwaltung aller Metadaten, auf der Basis einer Vier-Schichten Metamodell Architektur verwaltet, d. h. Gebrauchsfälle, Klassen, Module, Daten, Funktionen, Anwendungssysteme, Hardware- und Kommunikations- und Organisationseinheiten sowie Methodenmodelle.

Das Repository ist ein Information Resource Dictionary (IRD) im Sinne des ISO-Standards und gehört zum verwendeten Stand der Technik.
Grundidee der ersten Schicht ist, die Kontrolle und Dokumentation der Dienste auf der zweiten Ebene zu gewährleisten. Beschreibung der Metatypen für Beziehungen, Attribute, Methoden etc.
In der zweiten Schicht werden Klassentypen, Entitätstypen und Beziehungstypen definiert, wie Muster, Rahmenwerke (frameworks), Wertebereiche etc.
Die dritte Schicht ist fiir die konkreten Artefakte zuständig, die über die Services der zweiten Ebene für konkrete Muster etc. erstellt wurden.
Die vierte Schicht ist nicht Bestandteil des IRD-Standards und wird vom konkret generierten Methoden-Netzwerk definiert. Eine weitere Besonderheit des erfinderischen Verfahrens ist die aktive Bearbeitung der Metaschichten aufgrund der verfügbaren modellierten Verfahrensregeln insbesondere dadurch, daß die Metainformationen aller Schichten in den Laufzeitumgebungen manipulierbar verwaltet werden.
Das erfinderische Beschreibungsverfahren sorgt durch fallspezifisch d.h. statisch bzw. dynamisch instatiierte Abfrageagenten für die automatisierte Gewinnung der jeweils benötigten Informationen über alle Schichten und durch fallspezifisch statisch bzw. dynamisch instatiierte Auswertungsagenten für die automatisierte Wiedergewinnung und Qualifikation aus allen Schichten.

**Zu 2.** Der eingebrachte Stand der Technik wird erfindungsorientiert erörtert und die hinausragenden Teile dargestellt. Problembereiche werden durch planmäßiges Vorgehen analysiert und mit den Mitteln der Informationstechnik in Anwendungen abgebildet, um die Aufgaben innerhalb der abbildbaren Problembereiche zu erledigen oder zu unterstützen. Dieses methodische Vorgehen fördert für beständig wiederkehrende Teilprobleme den Entwurf und die Vervollkommnung von Mustern als Grundelement, die den Kern von Lösungen für das jeweilige Problem derart erläutern, so daß diese Lösungen als wiederanwendbare Kernelemente ganzer Problembereiche einsetzbar werden.

Beständig wiederkehrende Probleme, die über Muster benannt, abstrahiert und deren relevante Aspekte in einer allgemeinen Struktur identifizierbar beschrieben sind, können durch planmäßiges Vorgehen in vielen Problembereichen freigelegt werden, z.B. in der Architektur, in den Wirtschaftswissenschaften, in der Telekommunikation, in der Netzwerkverwaltung, in der Physik und der Biologie, um nur einige zu nennen.
Dieser methodische Ansatz wird bei der Lösung der erfinderischen Aufgabe durch Implementierung von Mustern als ein Grundelement für die Modellierung komplexer Situationen, insbesondere von softwaretechnischen Anwendungen, als ein Baustein von Rahmenwerken, realisiert.
Muster beschreiben allgemeine Lösungen von Teilproblemen innerhalb einer Modell-Struktur. Im wesentlichen erscheinen sie dann als das zu ordnende Durcheinander.
Mit dem Rahmenwerk-Ansatz wird eine Ordnung für einen allgemeinen Lösungsansatz insbesondere auf der Modellebene geschaffen, indem eine sinnvolle Zerlegung in kooperierende Teilaufgaben verfolgt wird beziehungsweise eine Aggregation von Lösungsteilen zu einem geordnet kooperienden Ganzen unterstützt wird. Teilaufgaben sind beispielsweise:
die Erweiterung um neue Aufgaben,
die Anpassbarkeit an sich weiterentwickelnde Technologien,
Änderungen bei funktionalen Anforderungen, wie z.B. die Einbindbarkeit von Problembereichen, in denen keine deterministische Lösungsstrategien bekannt sind, die nur eine Teillösung anbieten oder eine angenäherte Lösung und die nutzbringende Einbindbarkeit spezialisierter Teilsysteme.
Mit dem erfindungsgemäßen Verfahren werden die durch den musterorientierten Ansatz bedingten Redundanzen reduziert und fallbezogen optimiert.

**Zu 3.** Der eingebrachte Stand der Technik wird erfindungsorientiert erörtert und die hinausragenden Teile dargestellt. Die oben erläuterten Aspekte wie, Objekt, Muster, Intelligenz und Interaktion, findet man auch als kennzeichnende Eigenschaften in den Beschreibungen intelligenter Softwareagenten, wobei die Ausstattung mit Intelligenz bis zur Befähigung gehen kann, Aufgaben in Teilen autonom durchzuführen und mit der Umwelt auf sinnvolle Art und Weise zu interagieren.
Agentenmodelle gehören methodisch zu den objektorientierten Modellen. Die Objekte, auch die Agenten, bestehen aus Attributen und Methoden, kommunizieren miteinander über den Aufruf von Methoden oder Versenden von Nachrichten und verwenden objektorientierte Konzepte, wie Vererbung als die dynamische Teilhabe an den Eigenschaften anderer Objekte durch Delegation, Datenkapselung, Aggregation und aktive Objekte. Die Art der Kommunikation erstreckt sich zusätzlich auf Nachrichten über Absichten und Ziele und das Übermitteln von Wissen. Das Agentenmodell entspricht einem um Verhalten und Absichten erweiterten Basismodell objektorientierter Methoden.
Im Unterschied zum klassischen Eingabe-Verarbeitung-Ausgabe Prinzip muß ein Agent über intelligente Verarbeitungsmechanismen verfügen, mit deren Hilfe ein Agent seine wesentlichen Charakteristika erfüllen kann.
Die Beschreibung der Arbeitsprozesse innerhalb eines Agenten bietet Anhaltspunkte für die Implementierung konkreter aufgabenorientierter Agenten-Module.

Nicht alle Aktionen eines Agenten ergeben sich als Reaktion auf wahrgenommene Umweltsituationen. Ein Agent kann auch proaktiv handeln, z.B. wenn Informationen bei vorliegen bestimmter zeitlicher und/oder geographische Randbedingungen abfragbar sind.
Ein Abbildungsnetz, das z.B. über relevante Untersuchungs-Bereiche mit Hilfe des erfindungsgemäßen Netzwerkes von Methoden-Modellen geworfen wird, ermöglicht eine situationsgerechte Aktivierung der Kommunikation betroffener Bereichs-/Methoden-Agenten, um den Abgleich unterschiedlicher Abbildungsergebnisse (z.B. betriebswirtschaftlich relevanter Sachverhalte in Unternehmungen) zu veranlassen, um dann ggf. über einen Moderations-Agenten u.a. Ausgangsinformationen zur planerischen Gestaltung von Geschäftspolitiken zu erhalten.
Die Agenten des erfinderischen Verfahrens orientieren sich an allen Schichten der erfinderischen Metamodellierung, so daß deren Verhalten alle Aspekte der Metastrukturen nutzen kann.
Dieses Verhalten der erfindungsgemäßen polymorphen Agenten ermöglicht fallbezogene Spezialisierungen zu erkennen, zu bauen und auszuführen, weswegen für diese Agenten der Begriff "polymorpher Agent" eingeführt und verwendet wird, um so die Fähigkeit zur Anpassung und Selbstanpassung deutlich zu machen.

**Zu 4.** Das automatisierte Generieren von Anwendungs-Rahmenwerken aus Modellen entspricht dem heutigen Stand der Technik und wird deshalb nicht weiter erörtert. Hierzu wird auf die vorherige Erörterung der Druckschriften DE 165 23 036 A1 und DE 689 23 126 T2 hingewiesen.
Die besonderen Verfahrensschritte, mit denen der Generierierungsprozeß vorbereitet wird, indem geordnet und dynamisch aus verfahrensspezifischen Repositories mit ihrem Vier-Schichten-Metamodell ein mit marktüblichen Generatorwerkzeugen generierfähiges Modell erzeugt wird, kann den Patentansprüchen zu entsprechenden Einzelschritten entnommen werden.

Mit dem erfinderischen Unterstützungs-Verfahren ist vorteilhaft die Verwendung von Mustern gegeben, bei dem einerseits anforderungsgerechte Muster aufgefunden oder aufgebaut werden, die Implementierung von elementaren Mustern für ein Netzwerk von Methoden-Modellen unterstützt wird und automatisiert an die geforderte Umgebung angepaßt werden und die Erstellung von informations-technischen Anwendungen aus elementaren Mustern nach dem Schema eines Netzwerkes von Methoden-Modellen automatisiert wird.

Mit Methoden sind hier alle nach einem planmäßigen Vorgehen analysierbaren Verfahren gemeint, die informationstechnisch abbildbar sind. Muster sind bewährte Lösungen allgemeiner Entwurfsprobleme. Das Netzwerk von Methoden-Modellen ist ein Rahmenwerk und definiert eine Architektur für eine Familie von Anwendungen und stellt die Grundbausteine zur Erstellung (Instanziierung) einer lauffähigen Anwendung bereit.

Mustergestützer Entwurf von Rahmenwerken als quasi standardisierte Technik ist, allerdings nur in manueller und fachkundig mentaler Form, Bestandteil der industriellen Softwaretechnik. Das erfinderische Verfahren stellt hier eine neuartige Unterstützung bereit, mit der weitgehend automatisiert Muster zusammengeschaltet und zu komplexen erfindungsgemäßen Elementen für Lösungen aufgebaut werden können. Muster sind ein ausdruckmächtiges Mittel zur Aufbereitung und Darstellung von Analyse-, Architektur- und Entwurfsergebnissen und zur Darstellung der Qualität der Softwareproduktion.
Das vorbeschriebene erfindungsgemäße Verfahren ist zudem für einen Fachmann ohne weiteres auf andere Fachgebiete übertragbar, bei denen die fachlichen Abläufe und Zusammenhänge modellmäßig beschreibbar sind.
Insbesondere Betriebswirtschaft (Organisationsmodelle, Planungsmodelle, etc.), Volkswirtschaft (Geldflußmodelle, Simulationsmodelle), Biologie (Populationsmodelle, Genetische Simulationen), Physik, Architektur und die Ingenieurwissenschaffen. Fundstelle: C. Alexander, S. Ishikawa, M. Silverstein with M. Jacobson, I. Fiksdahl-King, S. Angel: A Pattern Language - Towns-Buildings-Construction, Oxford University Press, 1977.

## Patentansprüche

1. Verfahren zum Erzeugen eines regel- und anpaßbaren Netzwerkes von Modellen von Verhaltensmustern einschließlich Softwaresystemen, aufgebaut aus elementaren Grundeinheiten, unter Verwendung eines Computersystems mit mindestens einem MOF-konformen Repository,
**gekennzeichnet dadurch,**
- **daß** polymorphe Agenten erzeugt werden als instantiierbare Modelle in einer vierschichtigen Metamodellierung derart, daß im Modell sowohl die gesamte Metamodellierung des Verfahrens einschließlich der Modellierungsregeln wie auch die gesamte Metamodellierung des Agentensachgebiets einschließlich seiner Modellierungsregeln enthalten ist, und daß generierte Instanzen eines polymorphen Agenten mit Hilfe dieses Modellwissens ihr Modell und damit sich selbst anpassen und verändern, sofern sie aufgrund der modellierten Aufgabe und der modellierten Verhaltensmuster die Notwendigkeit dazu erkennen;
- **daß** entsprechend spezialisierte polymorphe Agenten mit Hilfe ihres Modellwissens aus generischen Grundmustern komplexe Elemente und dies wiederholend beliebig komplexe Elemente bis hin zu polymorphen Agenten und vernetzten Agentengesellschaften erstellen derart, daß über die mitgegebene Metamodellierung ein beliebig steuer- und regelbares Gesamtverhalten bewirkt wird, das sich veränderten Anforderungen durch Fortsetzung des Verfahrens selbst anpaßt, wenn aus der mitgegebenen Metamodellierung die Notwendigkeit hierfür erkannt wird;
- **daß** als Teil der Metamodellierung des Verfahrens eine Beschreibungstechnik geschaffen wird, mit der Zweck und Fähigkeiten der Elemente derart beschrieben werden, daß generierte Instanzen von Elementen ihr Modell interpretieren und damit Aggregations- und Anpassungsmechanismen des vorliegenden Verfahrens aufgabengerecht einsetzen;
- **daß** eine vierschichtige Metamodellierung gemäß der verfahrensspezifischen Beschreibungstechnik in allen Elementen und für alle Elemente eingesetzt wird, so daß generierte Instanzen von Elementen darüber die Fähigkeit zur Anpassung von verfahrungsgemäßen Modellen und damit zur Selbstanpassung erhalten.

2. Beschreibungstechnik nach Anspruch 1 zum Beschreiben der Elemente des Verfahrens in konsistenter, automatisiert auswertbarer Form auf der Basis einer MOF-konformen 4 Schichten Metamodellierung
**gekennzeichnet durch** die Verfahrensschritte:
(a) Erzeugen einer generellen Struktur für Beschreibungsmodelle, die für alle Elemente in einheitlicher Weise verwendet werden kann und von Hilfsmitteln, mit denen die Beschreibungen in automatisierter und geordneter Form gemäß den folgenden Schritten herstellbar sind:
(b) erzeugen eines konfigurierbaren und instantiierbaren Modells mit reflektivem Verhalten und eines zugehörigen Metamodells zur Steuerung der Abfrage von Beschreibungselementen als Prototyp eines Abfrageagenten,
(c) erzeugen eines konfigurierbaren und instantiierbaren Modells mit reflektivem Verhalten und eines zugehörigen Metamodells zur Steuerung der Auswertung von Beschreibungselementen als Prototyp eines Auswertungsagenten,
(d) Deklaration von Deskriptorenklassen zur Typisierung von Elementen und Elementfamilien,
(e) Deklaration von Deskriptoren und zugehörigen Wertevorräten zur Kennzeichnung von konkreten Eigenschaften von Elementen innerhalb ihrer jeweiligen Klassen;
(f) Erzeugen von elementspezifischen Beschreibungsmodellen für alle Typen von erzeugbaren Elementen, wobei die Schritte
(g) instantiieren eines elementspezifischen Abfrageagenten **durch** Konfigurieren des passenden Agentenprototyps anhand der Modell- und Metamodellinformation,
(h) kontrollierte Abfrage und Vergabe von Deskriptoren, **durch** den in Schritt (g) instantiierten Agenten;
(i) kontrollierte Abfrage, Analyse und Übernahme von fachsprachlichen Beschreibungen, **durch** den in Schritt (g) instantiierten Agenten;
(j) Aufbau des verfahrensspezifischen Metamodells des Elements aus den abgefragten und vom Agenten interpretierten Informationen und Modelldaten
durchlaufen werden;
(k) erzeugen von strukturierten Auswertehilfen und auswertungsspezifischen Gliederungsmechanismen für die Beschreibungselemente, aus denen die Beschreibungsmodelle oder die Beschreibungsmodellstrukturen bestehen, **durch**
(l) instantiieren eines Abfrageagenten zur Erstellung des Anforderungsprofils für eine Auswertung,
(m) instantiieren eines Auswertungsagenten auf der Grundlage des im vorangegangenen Verfahrensschritt erhobenen Anforderungsprofils.

3. Verfahren nach einem der vorherigen Ansprüchen, **dadurch gekennzeichnet,**
**daß** alle Elemente und ihre Beschreibungen in einer besonderen Datenbank, einem Repository, derart gespeichert werden, daß auch die Metainformationen aller Elemente enthalten sind, insbesondere Struktur und Strukturregeln sowie Verhalten und Verhaltensregeln und
**daß** aus den Informationen im Repository passende Elemente gefunden und mit den Regeln im Repository automatisiert zusammengefügt werden und zur Laufzeit manipulierbar zur Verfügung stehen.

4. Verfahren nach Anspruch 1 zur Erzeugung von Elementen **gekennzeichnet durch** die Verfahrensschritte:
(n) erzeugen von elementaren Grundeinheiten in Form von elementaren und komplexen generischen Mustern, die eine bestimmte, in der Praxis immer wiederkehrende Bedarfssituation auf prinzipielle Weise lösen;
(o) erzeugen von generischen Rahmenwerken aus elementaren oder komplexen generischen Mustern sowie aus vorhandenen Rahmenwerken gemäß spezifizierbaren Anforderungen;
(p) erzeugen von zusammengesetzten Ablaufeinheiten aus bestehenden Elementen **durch** konfigurieren, ausprägen und verkoppeln ausgewählter Teillösungen entsprechend der spezifizierbaren Anforderungen;
(q) erzeugen von polymorphen Agenten zur Steuerung und Kontrolle von Elementen.

5. Verfahren nach Anspruch 4 und Anspruch 2, **dadurch gekennzeichnet,**
**daß** die elementaren Mustern wie folgt erzeugbar und beschreibbar sind:
(r) Basismuster erzeugen;
(s) Metamodell der Musterstruktur erzeugen und Freiheitsgrade bei den vorgesehenen strukturellen Optionen für das Ausprägungen festlegen;
(t) Modell der zulässigen Anschlußstellen erzeugen und attributiv konfigurierbare Optionen festlegen;
(u) Beschreibung erzeugen und ablegen mit Hilfe der Verfahrensschritte gemäß Anspruch 2.
und **daß** komplexe generische Muster wie folgt erzeugbar und beschreibbar sind:
(v) aussuchen passender Muster mit Hilfe von fallspezisch gemäß Schritt (b) instantiierten Abfrageagenten mit den Teilschritten:
(w) Angabe der gewünschten Eigenschaften,
(x) Auswahl passender Muster aus den Beschreibungskatalogen,
(y) Selektion des für die Weiterarbeit am besten geeigneten Musters;
(z) Anschlußmodalitäten bestimmen, indem die Teilschritte
(aa) Auswertungsagent gemäß Verfahrensschritt (c) für die in Verfahrensschritt (v) ausgewählten Muster aus den Modell- und Metamodelldaten des Repository instantiieren,
(bb) mit Hilfe des Auswertungsagenten Anschlußmöglichkeiten ableiten,
(cc) Verbindung beziehungsweise Integration vorplanen durch generieren eines "Schattenmodells" (Planungs-Meta-Modell, das die Rollen der Muster oder Musterelemente in geplanten Beziehungen untereinander beschreibt)
durchlaufen werden;
(dd) die für die spätere Verwendung verbleibenden generische Ausprägeoptionen ermitteln, wozu die Einzelschritte
(ee) bestimmen der fest einzustellenden strukturellen Elemente des zukünftigen Musters, mit denen die Kernleistung des zugrundeliegenden Anwendungsfalls prinzipiell modelliert wird,
(ff) bestimmen der konfigurierbaren Eigenschaften einschließlich der legalen Wertebereiche, über die attributiv steuerbare Varianten des Anwendungsfalls modelliert werden,
(gg) bestimmen der anpaßbaren strukturellen Elemente des zukünftigen Musters durch generieren eines ausprägbaren Metamodells der Anpaßbereiche, mit dem die gewünschte verbleibende strukturelle Flexibilität modelliert wird. Solche Anpaßbereiche sind Sekundär- und Peripherieleistungen des zugrundeliegenden Anwendungsfalls
durchlaufen werden;
(hh) ausprägen des komplexen Grundmusters durch generieren eines syntaktisch geschlossenen Modells aus den Zwischenergebnissen der vorangegangenen Verfahrensschritte;
(ii) Beschreibung nach Verfahrensschritten gemäß Anspruch 2 erzeugen und ablegen.

6. Verfahren nach Anspruch 4 und nach Anspruch 2, **dadurch gekennzeichnet, daß** generische Rahmenwerke in Verfahrensschritt (o) wie folgt erzeugbar und beschreibbar sind:
(jj) aussuchen passender Muster mit Hilfe von fallspezisch gemäß Schritt (b), instantiierten Abfrageagenten entsprechend der Verfahrensschritte (w) bis (y);
(kk) aussuchen passender Rahmenwerke mit Hilfe von fallspezisch gemäß Schritt (b) instantiierten Abfrageagenten mit Hilfe der Teilschritte
(ll) Angabe der gewünschten Eigenschaften,
(mm) Auswahl aus den Beschreibungskatalogen,
(nn) Selektion des Rahmenwerks;
(oo) Anschlußmodalitäten bestimmen durch die Einzelschritte
(pp) Auswertungsagent für die in Verfahrensschritt (kk) ausgewählten Elemente instantiieren,
(qq) mit Hilfe des Auswertungsagenten Anschlußmöglichkeiten ableiten,
(rr) Verbindung beziehungsweise Integration vorplanen durch generieren eines "Schattenmodells" (Planungs-Meta-Modell, das die Rollen der Muster oder Musterelemente in geplanten Beziehungen untereinander beschreibt);
(ss) Ermittlung der generischen Ausprägeoptionen für die spätere Verwendung in weiteren Aggregationen durch die Schritte
(tt) bestimmen der fest einzustellenden strukturellen Elemente des zukünftigen Rahmenwerks, mit denen eine Kernleistung des zugrundeliegenden Anwendungsfallsystems prinzipiell modelliert wird,
(uu) bestimmen der konfigurierbaren Eigenschaften einschließlich der legalen Wertebereiche, über die attributiv steuerbare Varianten des Anwendungsfallsystems modelliert werden,
(vv) bestimmen der anpaßbaren strukturellen Elemente des zukünftigen Rahmenwerks durch generieren eines ausprägbaren Metamodells der Anpaßbereiche, mit dem die gewünschte verbleibende strukturelle Flexibilität modelliert wird. Solche Anpaßbereiche sind Sekundär- und Peripherieleistungen des zukünftigen Rahmenwerks;
(ww) anhängen des nächsten Rahmenwerkteils an das bisher bestehende Rahmenwerk durch generieren eines syntaktisch geschlossenen Modells aus den Zwischenergebnissen der vorangegangenen Verfahrensschritte;
(xx) Schritte (jj) bis (ww) so lange wiederholen, bis alle zu integrierenden Elemente in das im Aufbau befindliche Rahmenwerk gemäß den Anforderungen integriert worden sind;
(yy) Struktur eines Steuerungsrahmens für das Gesamtrahmenwerk bestimmen, indem die Teilschritte
(zz) wiederholen der Verfahrensschritte (kk) bis (ss) für ein Rahmenwerk des Typs "übergeordnete Steuerung",
(aaa) ableiten oder bestimmen der Dienste der zusammengetragenen Rahmenwerke, die extern benutzbar sein sollen,
(bbb) bestimmen der Eingriffsmöglichkeiten und festlegen der attributiven Konfigurierungsmöglichkeiten,
ausgeführt werden;
(ccc) Steuerungsrahmen ausprägen durch generieren eines syntaktisch konsistenten Modells aus dem Zwischenergebnis des vorangegangenen Verfahrensschritts und dem letzten Zwischenergebnis aus dem Verfahrensschritt (xx) (das zusammengetragene Rahmenwerk);
(ddd) Beschreibung nach Verfahrensschritten gemäß Anspruch 2 erzeugen und ablegen.

7. Verfahren nach Anspruch 4, **dadurch gekennzeichnet, daß** Ablaufeinheiten in Verfahrensschritt (p) wie folgt erzeugbar sind:
(eee) Aussuchen eines anforderungsgemäßen Rahmenwerks mit Hilfe von fallspezisch gemäß Schritt (b) instantiierten Abfrageagenten, der Verfahrensschritte (11) bis (nn) oder Aufbau eines anforderungsgemäßen Rahmenwerks gemäß der Verfahrensschritte (jj) bis (ddd);
(fff) Verwendungsarten bestimmen und damit offene Generik festschreiben;
(ggg) Ablaufrahmen und damit grundsätzliche Verhaltensweisen bestimmen;
(hhh) konkretes externes Verhalten der zukünftigen Ablaufeinheit und Zielumgebung bestimmen;
(iii) Ablaufrahmen und Rahmenwerk zusammen ausprägen;
(jjj) Ablaufeinheit gemäß Anforderungen generieren;
(kkk) zugehöriges Hilfesystem generieren durch Ausprägen und Instantiieren der zu den Rahmenwerken parallelen Auswertungsagenten nach Schritt (c).

8. Verfahren nach Anspruch 4 **dadurch gekennzeichnet, daß** polymorphe Agenten in Verfahrensschritt (q) wie folgt erzeugbar sind:
(111) aussuchen eines anforderungsgemäßen Agenten-Rahmenwerks mit Hilfe eines entsprechenden Auswerteagenten und der Beschreibungselemente im Repository;
(mmm) Ablaufeinheit beziehungsweise zugrundeliegendes Rahmenwerk festlegen;
(nnn) aus den Elementen im Repository ein generisches Verhaltensmuster aussuchen, mit dem eine grundsätzliche gewünschte Verhaltensweise modelliert wird;
(ooo) das gewählte Verhaltensmuster fallspezifisch gemäß den Anforderungen durch Festlegen der offenen Parameter einstellen;
(ppp) Verhaltensmuster einbinden, indem das festgeschriebene Muster dem Agenten hinzugefügt wird und die relevanten Modellteile des zugrundeliegenden Rahmenwerks in das Metamodell des Agenten übernommen werden;
(qqq) Schritte (mmm) bis (ppp) für alle benötigten Verhaltensmuster wiederholen;
(rrr) Ablaufeinheit beziehungsweise zur Ablaufeinheit umgewandeltes Rahmenwerk einbinden, indem die Steuerungsoberfläche der Einheit mit den Steuerungsausgängen des Agenten verkoppelt werden;
(sss) polymorphe Agenten generieren (lassen).

9. Verfahren nach einem der vorherigen Ansprüchen, **dadurch gekennzeichnet, daß** bestehende Softwarekomponenten mit Hilfe von Mustern und/oder generischen Rahmenwerken entsprechend der nachfolgenden Verfahrensschritte so gekapselt und beschrieben werden, daß sie wie Elemente (Muster beziehungsweise Rahmenwerke) verwendet werden können (Die Methodik der Realisierung wird allgemein als Migrationstyp bezeichnet):
(ttt) Anforderung an die Kapselung und damit Typ der Kapselung festlegen (Migrationstyp bestimmen);
(uuu) Grundstruktur für die Kapselung bestimmen, indem aus der Sammlung der dafür geeigneten Elemente ein passendes Befehls- oder Aufrufmuster, ein Ablaufrahmentyp, ein Steuerungsrahmentyp oder ein Agententyp mit Hilfe der Beschreibungselemente im Repository ausgesucht wird;
(vvv) für spätere Verwendung bereitzuhaltende Generik für den gewählten Kapselrahmen bestimmen, indem die Verfahrensschritte
(www) bestimmen der fest einzustellenden strukturellen Elemente des Kapselrahmens, mit denen die invariante Leistung der geplanten Kapselung prinzipiell modelliert wird,
(xxx) bestimmen der konfigurierbaren Eigenschaften einschließlich der legalen Wertebereiche, über die attributiv steuerbare Varianten der geplanten Kapselung modelliert werden,
(yyy) bestimmen der anpaßbaren strukturellen Elemente der geplanten Kapselung durch generieren eines Metamodells der Anpaßbereiche, mit dem die gewünschte verbleibende strukturelle Flexibilität modelliert wird. Solche Anpaßbereiche sind Sekundär- und Peripherieleistungen der geplanten Kapselung,
ausgeführt werden;
(zzz) Umfang, Art und Struktur der Dienste der gekapselten Softwarekomponente bestimmen;
(aaaa) Kapselrahmen ausprägen durch generieren eines syntaktisch konsistenten Modells entsprechend der Spezifikationen der vorangegangenen Verfahrensschritte;
(bbbb) Beschreibung nach Verfahrensschritten gemäß Anspruch 2 erzeugen und ablegen.

10. Datenverarbeitungsprogramm, das Instruktionen enthält, welche bei Ausführung durch einen Computer die Schritte nach einem der vorhergehenden Verfahrensansprüche ausführen.

## Claims

1. Method to generate a controllable and adaptable network of models of behavior templates including software systems, built up from elementary fundamental units using a computer system with at least one MOF-compliant repository , **characterised in,**
• **that** polymorphous agents are created as instantiable models in a four-layer metamodel in such a way, that the model contains the entire metamodeling of the method including the rules of modeling as well as the entire metamodeling of the agent domain including its rules of modeling , and that generated instances of a polymorphous agent adapt and change their model, and by that themselves, aided by of this model knowledge, provided that they recognize the necessity for this purpose due to the modelled task and the modelled behavior templates ;
• **that** correspondingly specialized polymorphous agents generate aided by their model knowledge complex elements from generic basic templates and by repetition generate arbitrarily complex elements up to polymorphous agents and linked agent societies, such that a total behaviour is caused which is arbitrarily guidable and controllable due to the included metamodeling and which adapts itself to changed requirements by continuing the method if the necessity for it is recognized using the included metamodeling; ;
• **that** as a part of the metamodeling of the method a descriptive technique is created, by which purpose and abilities of the elements are described in such a way that generated instances of elements interpret their model thereby utilising the mechanisms of aggregation and adaptation of this method to accomplish a given task;
• **that** a four-layer metamodeling is used in accordance with the method - specific descriptive technique in all elements and for all elements, such that generated instances of elements thus obtain the ability for the adaptation of models conforming to this method, including selfadaptation.

2. Descriptive technique according to claim 1 to describe elements of the method in a consistent automatically evaluable form based on a MOF-compliant four-layer metamodeling
**characterized by** the procedural steps:
(a) Generating a general structure for description models, that can be employed for all elements in homogeneous manner and generating supporting tools by which the descriptions can be produced in automatized and orderly form in accordance with the following steps:
(b) generating a configurable and instantiable model with reflective behavior and a corresponding metamodel to control the interrogation of description elements as a prototype of an interrogation agent,
(c) generating a configurable and instantiable model with reflective behavior and a corresponding metamodel to control the evaluation of description elements as a prototype of an evaluation agent,
(d) Declaration of descriptor classes for the standardization of elements and element families,
(e) Declaration of descriptors and corresponding values sets to label concrete properties of elements within their respective classes.
f) Generation of element-specific descriptive models for all models of creatable elements, executing the steps
(g) instantiate an element-specific interrogation agent by configuring the adequate prototype agent by means of the model and metamodel information,
(h) controlled interrogation and allocation of descriptors, by the agent instantiated in step (g);
(i) controlled interrogation, analysis and incorporation of technical descriptions, by the agent instantiated in step (g);
(j) construction of the procedure-specific metamodel of the element from the information and model data interrogated and interpreted by the agent ;
(k) generate structured evaluation-aids and evaluation-specific structuring mechanisms for the descriptive elements which constitute the description models or the structures of description models, by
(l) instantiating an interrogation agent for the preparation of the requirement profile for an evaluation,
(m) instantiating an evaluation agent based on the requirement profile aquired in the preceding procedural step .

3. Method according to one the previous claims, **characterized in that** all elements and their descriptions are stored in a special database, a repository, in such a way that also the meta-information of all elements is contained, in particular structure and structuring rules as well as behavior and behavioral rules and
that adequate elements are found with the information in the repository and can be joined with the rules in the repository automatizedly and are available at runtime for further manipulation.

4. Method according to claim 1 for the generation of elements
**characterized by** the procedural steps :
(n) generation of elementary fundamental units in the form of elementary and complex generic patterns , which solve in a principal fashion a certain, often recurring group of requirements;
(o) generation of generic frameworks from elementary or complex generic models as well as from available frameworks in accordance with specifiable requirements;
(p) generation of assembled runtime units from existing elements by configuring, instantiating and coupling selected partial solutions according to specifiable requirements;
(q) generation of polymorphous agents for the guidance and control of elements.

5. Method according to claim 4 and claim2, **characterized in that** the elementary patterns may be created and described as follows :
(r) Generation of a basic pattern ;
(s) Generation of the metamodel of the model structure and determining degrees of freedom for the planned structural options of the instantiation ;
(t) Generation of the model of the permissible connection points and determining attributively configurable options;
(u) Generation of the description and storing it aided by the procedural steps according to claim 2.
and that complex generic patterns are creatable and describable as follows:
(v) select adequate patterns with the aid of interrogation agents which were instantiated case specifically according to step (b) and which execute the individual steps:
(w) Specification of the desired properties,
(x) Selection of adequate patterns from the description catalogs,
(y) Selection of the pattern best suited for the continuation of work .
(z) Determine connection modalities by executing the individual steps
(aa) instantiate using the model data and metamodel data of the repository, an evaluation agent according to procedural step (c) for the patterns selected in procedural step (v),
(bb) deriving connection options with the aid of the evaluation agent,
(cc) To plan connection and/or integration by generating a "shadow model" (Planning meta model that describes the roles of the patterns or pattern elements in planned relations );
(dd) to determine the generic instantiation options that remain for the later use by executing as individual steps:
(ee) determine those structural elements of the future model which are firmly defined and which model the core service of the underlying use case on principle,
(ff) determine the configurable properties including the legal ranges of values which model those variants of the use case to be controlled by attribute values,
(gg) determine the adaptable structural elements' of the future model by generating an instantiable metamodel of the domain of adaption with which the desired remaining structural flexibility is modelled. Such domains of adaption are secondary and peripheral services of the underlying use case ;
(hh) instantiate the complex basic model by generating a syntactically closed model from the interim results of the preceding procedural steps ;
(ii) Create and store the description with procedural steps according to claim 2 .

6. Method according to claim 4 and according to claim 2,
**characterized in , that generic frameworks in procedural** step (o) are creatable and describable as follows:
(jj) select adequate models with the aid of interrogation agents which were instantiated case specifically according to step (b), and which execute the procedural steps (w) to (y);
(kk) select adequate frameworks with the aid of interrogation agents which were instantiated case specifically according to step (b) and which execute the individual steps
(II) Specification of the desired properties,
(mm) Selection from the description catalogs,
(nn) Selection of the framework.
(oo) Determine connection modalities by executing the individual steps
(pp) Instantiate evaluation agent for those elements selected in procedural step (kk)
(qq) derive connection options with the aid of the evaluation agent,
(rr) To plan combination and/or integration by generating a "shadow model" (Planning meta model that describes the roles of the patterns or pattern elements in planned relations ) ;
(ss) Determine of the generic instatiation -options for the later use in further aggregations by executing the steps
(tt) determine those structural elements of the future framework which are firmly defined and which model a core service of the underlying use case system is modelled on principle,
(uu) determine the configurable properties including the legal ranges of values which model those variants of the use case system to be controlled by attribute values,
(vv) determine the adaptable structural elements' of the future framework by generating an instantiable metamodel of the domain of adaption with which the desired remaining structural flexibility is modelled. Such domains of adaption are secondary and peripheral services of the future framework;
(ww) append the next piece of framework to the currently existing framework by generating a syntactically closed model from the interim results of the preceding procedural steps;
(xx) repeat steps (jj) to (ww)until all elements to be integrated have been integrated according to requirements into the framework under construction;
(yy) Determine the Structure of a frame for guidance and control for the entire framework by executing the individual steps
(zz) repeat the procedural steps' (kk) to (ss) for a framework of type "supervisory control",
(aaa) to derive or to determine the services of the collected frameworks that are supposed to be externally usable,
(bbb) determine the intervention options' and specify the attributive configuration options ;
(ccc) Instantiate a frame for guidance and control by generatin a syntactically consistent model from the interim result of the preceding procedural step and the latest interim result from the procedural step (xx) (the collected framework);
(ddd) create and store description according to procedural steps from claim 2.

7. Method according to claim 4, **characterized in that** runtime units from procedural step (p) may be created as follows:
(eee) Select a framework conforming to requirements with the aid of an interrogation agent instantiated case specifically in accordance with step (b), the procedural steps' (II) to (nn)construction of a framework conforming to requirements by following the procedural steps' (jj) to (dd).
(fff) Determining modes of usage and use that to stipulate open generic .
(ggg) Determining runtime frames and use that to define fundamental behavior.
(hhh) determining concrete external behavior of the future runtime unit and target environment.
(iii) Instantiate runtime frame and framework together;
(jjj) Generating runtime unit in accordance with requirements .
(kkk) generating corresponding help system by instantiating the evaluation agents according to step (c) that parallel the frameworks.

8. Method according to claim 4, **characterised in that** polymorphous agents from procedural step (q) may be created as follows:
(III) select an agent framework conforming to requirements with the aid of a corresponding evaluating agent and the description elements in the repository;
(mmm determine runtime unit and/or underlying framework;
(nnn) selecting a generic behavior template from the elements in the repository with which a fundamental desired behavior is modelled;
(ooo) tuning the chosen behavior pattern in a case-specific way according to requirements by specifyin open parameters;
(ppp) Linking the behavior pattern by adding the stipulated model to the agent and by including the relevant model parts of the underlying framework in the metamodel of the agent;
(qqq) Repeating Steps (mmm) to (ppp) for all necessary behavior patterns ;
(rrr) Linking the runtime unit and/or the framework converted to a runtime unit by coupling the control interface of the unit with the control interfaces of the agent;
(sss) generate (have generated) the polymorphous agent .

9. Method according to one of the previous claims, **characterized in that** existing software components an be encapsulated and described according to the following procedural steps with aid of patterns and/or generic frameworks in a way that they can be employed as elements within this method (Models and/or frameworks) (The methodology of the realization is commonly known as migration type ):
(ttt) Specify the requirements of the encapsulation and wth that the type of the encapsulation (determine Migration type) .
(uuu) determine Basic structure for the encapsulation by selecting a suitable element from the collection of the elements an adequate command or call pattern, an adequate type of runtime framework, control framework, or agent, aided by the descriptive elements in the repository ;
(vvv) determine generic options to be kept for later use in the chosen encapsulation framework by executing the procedural steps
(www) determine those structural elements of the encapsulation framework which are firmly defined and which model the invariant service of the planned encapsulation on principle,
(xxx) determine the configurable properties including the legal ranges of values which model those variants of the planned encapsulation to be controlled by attribute values
(yyy) determine the adaptable structural elements' of the planned encapsulation by generating an instantiable metamodel of the domain of adaption with which the desired remaining structural flexibility is modelled. Such domains of adaption are secondary and peripheral services of the planned encapsulation .
(zzz) Determining extent, kind and structure of the services of the encapsulated software component.
(aaaa)Instatiate encapsulation framework by generating a syntactically consistent model according to the specifications of the preceding procedural steps ;
(bbbb) Create and store description according to procedural steps from claim 2 .

10. Data processing program containing instructions that carry out the steps according to one of the preceding procedure claims if executed on a computer.

## Revendications

1. Procédé au fait de produire un réseau réglable et adaptable des modèles des types de comportement y compris les systèmes de logiciel, construit des unités principales élémentaires, sous l'application d'un système d'ordinateur avec un Repository au moins conforme MOF,
**caractérisé par**,
· que les agents polymorphe sont produits comme les modèles créables dans un modelé méta dans quatre niveaux tellement, que dans le modèle tout le modelé méta du procédé y compris les règles de modelé ainsi que tout le modelé méta du domains d'agent y compris ses règles de modelé est contenu, et que les instances produites d'un agent polymorphen à l'aide de ces connaissances de modèle son modèle et avec s'adaptent et changent, s'ils reconnaissent en raison de la tâche modelée et les types de comportement modelés la nécessité en plus;
· qu'en correspondant se spécialisait les agents polymorphe à l'aide de leurs connaissances de modèle des modèles principaux génériques les éléments complexes et ces éléments en répétant à volonté complexes jusqu'à là aux agents polymorphen et les sociétés d'agent interconnectées produisent tellement, que sur le modelé méta donné un comportement total contrôlable et réglable est provoqué, qui s'adapte aux demandes changées par la continuation du procédé, si du modelé méta donné la nécessité est reconnue pour cela;
· que comme la partie du modelé méta du procédé une technique de description est créée, avec laquelle le but et les capacités des éléments sont décrits tellement, que les instances produites des éléments interprètent son modèle et mettent avec cela les mécanismes d'ion d'agrégat et d'accommodation du procédé présenté satisfaire aux exigences;
· qu'un modelé méta dans quatre niveaux est mis selon la technique de description spécifique de procédée dans tous les éléments et pour tous les éléments, si bien que les instances produites des éléments reçoivent à ce sujet la capacité à l'accommodation des modèles en conformité avec le precédé et avec cela à l'ajustement automatique.

2. Technique de description selon la revendication 1 au fait de décrire les éléments du procédé dans la forme consistant, automatise et exploitable sur la base d'un modèle méta conformes MOF dans quatre niveaux
**caractérisé par** les pas dépensez :
(A) Produisent d'une structure générale pour les modèles de description qui peuvent être utilisés pour tous les éléments dans la manière unitaire et par les moyens avec lesquels les descriptions sont en forme automatisée et réglée selon les pas suivants créable :
(B) Produisent d'un modèle configurable et créable avec la conduite réfléchi et un modèle méta appartenant à la conduite de l'interrogation des éléments de description comme le prototype d'un agent d'interrogation,
(C) Produisent d'un modèle configurable et créable avec la conduite réfléchi et un modèle méta appartenant à la conduite de l'exploitation des éléments de description comme le prototype d'un agent d'exploitation,
(D) La déclaration des classes de descripteur à la standardisation des éléments et les familles d'élément,
(E) La déclaration des descripteurs et les réserves chères appartenantes à la caractéristique des qualités concrètes des éléments à l'intérieur de leurs classes respectives.
( F) Produisent des modèles de description spécifiques d'élément pour tous les types des éléments créables, à quoi les pas
(G) Créent d'un agent d'interrogation spécifique d'élément par le configurer du prototype d'agent convenant au moyen de l'information de modèle et de modèle méta,
(H) Interrogation contrôlée et la distribution des descripteurs, par dans le pas (g) aux agents créés;
(I) L'interrogation contrôlée, l'analyse et la prise en charge des descriptions dans langages du métier, par dans le pas (g) aux agents créés;
(J) Construis du modèle méta spécifique de procédé de l'élément de interrogé et de l'agent à des renseignements interprétés et les dates de modèle passeront;
(K) Produisent des aides d'exploitation structurées et les mécanismes de classification spécifique d'interprétation pour les éléments de description dont les modèles de description ou les structures de modèle de description se composent, par
(L) Créent d'un agent d'interrogation à la élaboration du profil requis pour une exploitation,
(M) Créent d'un agent d'exploitation sur la base du profil requis levé au pas dépense précédé.

3. Procédé selon l'une quelconque des revendications précédentes,
caractérisé en,
que tous les éléments et leurs descriptions sont mémorisés dans une banque de données particulière, un Repository, tellement qu'aussi le information méta de tous les éléments sont contenus, en particulier la structure et les règles de structure ainsi que les conduites et les règles comportent et
que des informations dans le Repository les éléments convenant sont trouvés et sont assemblés avec les règles dans le Repository automatisé et au délai de validité manipulable être à la disposition.

4. Procédé selon la revendication 1 à la production des éléments **caractérisé par** les pas dépensez :
(N) produisent des unités principales élémentaires dans la forme des modèles élémentaires et complexes génériques, que résolvent une situation de besoin décidé et périodique dans proclique en manière par principe;
(O) produisent des ouvrages de cadre génériques des modèles élémentaires ou complexes génériques ainsi que des ouvrages de cadre disponibles selon les demandes specifiquablé;
(P) produisent des unités de déroulement composées des éléments existants par configurent, expriment et accouplent des solutions de partie choisies en correspondant des demandes specifiquablé;
(Q) Produisent des agents polymorphes à la réglage et le contrôle des éléments.

5. Procédé selon l'une des revendications 4 et 2, caractérisé en,
que les modèles élémentaires sont créables comme c'est indiqué plus loin et sont décriables :
(R) Les modèles de base produisent;
(S) Le modèle méta de la structure de modèle produisent et fixent les degrés de liberté aux options prévues structurales pour les expressions;
(T) Le modèle des accès admissibles produisent et fixent les options configurable épithète;
(U) Produisent la description et remettent à l'aide des pas dépensez selon la revandication 2.
Et que les modèles complexes génériques sont créables comme c'est indiqué plus loin et sont décriables :
( V) choisissent des modèles convenant à l'aide de de la dépendance de cas selon le pas (B) l'agent d'interrogation créé avec les pas de partie :
(W) l'indication des qualités souhaitées,
(X) le choix des modèles convenant des catalogues de description,
(Y) la sélection pour la suite du travail au meilleur modèle convenable.
( Z) Les procédures de raccord déterminent pendant que les pas de partie
(aa) l'agent d'exploitation selon le pas dépense (C) pour dans le pas dépense créent (v) modèles choisis des dates de modèle et de modèle méta du Repository,
(bb) a l'aide de l'agent d'exploitation les possibilités de raccord détournent,
(cc) Projeter la liaison ou plutôt l'intégration par produisent d'un "modèle d'ombre" (le métamodèle de planification qui décrit les roulants des modèles ou les éléments de modèle dans les relations projetées mutuellement) passeront;
(dd) les options d'expriment génériques restantes pour l'application plus tardive découvrent, pourquoi les régimes pas à pas
(ee) destinent des éléments solidement à régler structuraux du modèle futur avec lesquels l'exécution principale du cas d'application étant à la base est modelée par principe,
(ff) destinent des qualités assemblerables y compris les domaines chers legaux, sur les variantes épithètes maniables du cas d'application sont modelés,
(gg) destinent des éléments adptables structuraux du modèle futur par produisent d'un modèle méta exprimerable du domaine adptable avec qui la flexibilité souhaitée restante structurale est modelée. Un tel domaine adptable sont secondaires et les services de périphérie du cas d'application étant à la base passeront;
(hh) Expriment du modèle principal complexe par produisent d'un modèle syntaxique conclu des resultats provisoire des pas dépensez précédés;
(ii) La description après les pas dépensez produisent selon la revendication 2 et remettent.

6. Procédé selon l'une des revendications 4 et 2, caractérisé en que les ouvrages de cadre génériques sont créables dans le pas dépense (O) comme c'est indiqué plus loin et sont décriables :
(jj) Choisissent des modèles convenant à l'aide de spécifique en cas selon le pas (B), les agents d'interrogation créés en correspondant des pas dépensez (W) jusqu'à (Y);
(kk) Choisissent des ouvrages de cadre convenant à l'aide de specifique en cas selon le pas (B) aux agents d'interrogation créés à l'aide des pas de partie
(II) L'indication des qualités souhaitées,
(mm) Le choix des catalogues de description,
(nn) La sélection de l'ouvrage de cadre.
(oo) Les procédures de raccord destinent par les régimes pas à pas
(pp) L'agent d'exploitation pour dans le pas dépense (Kk) les éléments choisis créent,
(qq) A l'aide de l'agent d'exploitation les possibilités de raccord détournent,
(rr) Projeter la liaison ou plutôt l'intégration par produisent d'un "modèle d'ombre" (le métamodèle de planification qui décrit les roulants des modèles ou les éléments de modèle dans les relations projetées mutuellement);
(ss) La recherche des options d'expriment génériques pour l'application plus tardive dans les ions d'agrégat supplémentaires par les pas
(tt) Destinent des éléments solidement à régler structuraux de l'ouvrage de cadre futur avec lesquels une exécution principale du système de cas d'application étant à la base est modelée par principe,
(uu) Destinent des qualités assemblerables y compris les domaines chers legaux, sur les variantes épithètes maniables du système de cas d'application sont modelés,
(vv) Destinent des éléments adptables structuraux de l'ouvrage de cadre futur par produisent d'un modèle méta exprimerable du domaine adptable avec qui la flexibilité souhaitée restante structurale est modelée. Un tel domaine adptable sont secondaires et les services de périphérie de l'ouvrage de cadre futur;
(ww) Ajoutent de la plus proche partie d'ouvrage de cadre à l'ouvrage de cadre jusqu'à maintenant existant par produisent d'un modèle syntaxique cohérent des résultats provisoire des pas dépensez précédés;
(xx) Les pas (jj) jusqu'à (ww) répètent si longtemps jusqu'à ce que tous aient été intégrés aux éléments intégrants dans l'ouvrage de cadre se trouvant dans la structure selon les demandes;
(yy) La structure d'un cadre de conduite déterminent pour l'ouvrage total de cadre pendant que les pas de partie
(zz) Répètent des pas dépensez (kk) jusqu'à (ss) pour un ouvrage de cadre du type "la conduite subordonnée",
(aaa) Détournent ou destinent des services des ouvrages de cadre assemblés qui doivent être utilisables extérieurement,
(bbb) Destiner des possibilités d'intervention et fixent l'épithète, sont accomplis;
(ccc) Les cadres de conduite expriment par produisent d'un 20 modèle syntaxique consistant du resultat provisoire du pas dépense précédé et le dernier resultat provisoire du pas dépense (xx) (l'ouvrage de cadre assemblé);
(ddd) La description après les pas dépensez produisent selon la revendication 2 et remettent.

7. Procédé selon la revendication 4, caractérisé en que les unités de 25 déroulement sont créables dans le pas dépense (p) comme c'est indiqué plus loin :
(eee) Choisissent d'un ouvrage de cadre prescrit à l'aide de spécifique en cas, selon le pas (b), l'agent d'interrogation créé, les pas dépensez (II) jusqu'à (nn) ou la structure d'un ouvrage de cadre prescrit selon les pas dépensez (jj) jusqu'à (dd).
(fff) Les variétés d'application destinent et codifient avec cela genre ouvert.
(ggg) Les cadres de déroulement déterminent et avec cela les lignes de conduite fondamentales.
(hhh) La conduite concrète extérieure de l'unité de déroulement future et les alentours de but destinent.
(iii) Les cadres de déroulement et l'ouvrage de cadre expriment ensemble;
(jjj) L'unité de déroulement produisent selon les demandes.
(kkk) Le système d'aide appartenant produisent par le fait d'exprimer et Créent des agents d'exploitation parallèles aux ouvrages de cadre après le pas (c).

8. Procédé selon la revendication 4 caractérisé en que les agents polymorphes sont créables dans le pas dépense (q) comme c'est indiqué plus loin :
(III) Choisissent d'un ouvrage de cadre d'agent prescrit à l'aide d'un agent d'exploitation correspondant et les éléments de description dans le Repository;
(mmm) l'unité de déroulement ou plutôt l'ouvrage de cadre étant à la base fixent;
(nnn) Des éléments dans le Repository choisissent un type de comportement générique avec lequel une ligne de conduite fondamentale souhaitée est modelée;
(ooo) Le type de comportement choisi règlent la dépendance de cas selon les demandes par la définition des paramètres ouverts;
(ppp) Les types de comportement relient pendant que le modèle codifié est ajouté à l'agent et les parties de modèle pertinentes de l'ouvrage de cadre étant à la base sont reprises dans le modèle méta de l'agent;
(qqq) Les pas (mmm) jusqu'à (ppp) répètent pour tous les types de comportement nécessaires;
(rrr) L'unité de déroulement ou plutôt à l'unité de déroulement relient l'ouvrage de cadre transformé pendant que la surface de conduite de l'unité avec les sorties de conduite de l'agent sont accouplées;
(sss) (laissent) produire les agents polymorphe.

9. Procédé selon l'une quelconque des revendications précédentes,
caractérisé en que les composants de logiciel existants sont capsulés à l'aide de par les modèles et / ou les ouvrages de cadre génériques en correspondant des pas dépensez suivants ainsi et sont décrits qu'ils peuvent être utilisés comme les éléments (le modèle ou plutôt les ouvrages de cadre) (la méthodologie de la réalisation est indiqué en général comme le type de migration) :
(ttt) La demande au capsulement fixent et avec cela le type du capsulement (le type de migration destinent).
(uuu) La structure principale destinent pour le capsulement pendant que de la collection des éléments convenables pour cela un modèle d'ordre ou d'appel convenant, un type de cadre de déroulement, un type de cadre de conduite ou un type d'agent est choisi à l'aide des éléments de description dans le Repository;
(vvv) Destiner l'application plus tardive déterminent genre à tenir prêt pour le cadre de capsule choisi(voté) pendant que les pas dépensez
(www) destinent des éléments solidement à régler structuraux du cadre de capsule avec lequel l'exécution(productivité) invariante du capsulement projeté est modelée par principe,
(xxx) destinent des qualités assemblerables y compris les domaines chers legaux, sur les variantes épithètes maniables du capsulement projeté sont modelés,
(yyy) destinent des éléments adptables structuraux du capsulement projeté par produisent d'un modèle méta du domaine adptable avec qui la flexibilité souhaitée restante structurale est modelée. Un tel domaine adptable sont secondaires et les services de périphérie du capsulement projeté, sont accomplis.
(zzz) Destiner, la genre et la structure des services du composant de logiciel capsulé destinent.
(aaaa) Les cadres de capsule expriment par produisent d'un modèle syntaxique consistant en correspondant des spécifications des pas dépensez précédés;
(bbbb) La description après les pas dépensez produisent selon la revendication 2 et remettent.

10. Programme de traitement de données, qui contient les instructions, lequel exécute à l'exécution par un ordinateur les pas selon l'une queiconque des revendications de procédé précédentes.
